# EUROPEAN PATENT SPECIFICATION

(11) **EP 2 093 449 B1**
(45) Date of publication and mention of the grant of the patent: **02.07.2014**
(21) Application number: 09250418.2
(22) Date of filing: 18.02.2009
(51) Int. Cl.: F16D 43/08

(54) **Motorcycle including centrifugal clutch**
Motorrad mit Fliehkraftkupplung
Motocyclette incluant un embrayage centrifuge

(30) Priority: 25.02.2008 JP 2008043509
(43) Date of publication of application: 26.08.2009
(73) Proprietor: Yamaha Hatsudoki Kabushiki Kaisha, Shizuoka-ken Shizuoka 438-8501 (JP)
(72) Inventor: Inomori, Toshinori, Iwata-shi, Shizuoka-ken 438-8501 (JP); Ishida, Yousuke, Iwata-shi, Shizuoka-ken 438-8501 (JP)
(74) Representative: Zimmermann, Tankred Klaus

(56) References cited:
- DE-A1- 1 480 686
- GB-A- 804 759
- JP-A- 4 316 724
- JP-A- 52 004 955
- JP-A- 61 024 834
- US-A- 3 091 315

## Description

### Technical Field

The present invention relates to a motorcycle including a centrifugal clutch.

### Background Art

Japanese Patent Application Laid-Open Publication No. 2002-021879 contains a description of contact between clutch plates of a multi-plate centrifugal clutch when driving of an engine is in a stopped state. The multi-plate centrifugal clutch described in JP2002-021879 includes centrifugal weights, a pressure plate, and clutch plates (a first plate and a second plate). Contact surfaces of the respective pressure plate and clutch plate are parallel to each other, and the pressure plate presses the clutch plate by using the centrifugal force of the centrifugal weights. Further, in the pressure plate, cam surfaces holding the respective centrifugal weights are provided so that each of the cam surfaces has an angle from a contact surface between the pressure plate and the clutch plate. More specifically, the pressing force against the clutch plate of the pressure plate is determined depending on the positions of the cam surfaces of the respective centrifugal weights that have received the centrifugal force.

The multi-plate centrifugal clutch described in JP2002-021879 is configured so that the centrifugal weights do not contact with the pressure plate when the engine is in a stopped state. In the case where the centrifugal weights are in contact with the pressure plate, the case leads to contact between the pressure plate and the clutch plate. In the case where the pressure plate and the clutch plate are in contact with each other, there occurs a drag state, which is similar to the engaged state of the clutch. In the case of a motorcycle using such a multi-plate centrifugal clutch causing the drag state, there arises a problem in which a travel resistance in the case where the motorcycle in the stopped state of the engine is pushed and moved. Hence, in the multi-plate centrifugal clutch described in JP2002-021879, the cam surfaces provided in the pressure plate are each formed into such a shape that the centrifugal weights separate separates at a predetermined distance from the pressure plate when the engine is in a stopped state.

However, in the case of the motorcycle including the multi-plate centrifugal clutch described in JP2002-021879, while the drag state of the clutch is prevented, a case can take place in which, in parking in, for example, a sloped road, the resistance against the sloped road is insufficient.

Further, in the case where the motorcycle according to the JP2002-021879 is a motorcycle including an auto-controlled gear transmission, i.e., a so-called AMT (automated manual transmission), when the engine of the motorcycle is in the stopped state, the driving state is shifted to the neutral position, that is, the gear input operation is not effected. Hence, in the case where the motorcycle according to JP2002-021879 is a motorcycle including the AMT, the motorcycle cannot be parked stably when parking in, for example, a sloped road. Hence, in the case where the motorcycle according to JP2002-021879 is a motorcycle including the AMT, dedicated brake means is necessary to stably park the motorcycle in a sloped road. On the other hand, however, in the case where the motorcycle according to JP2002-021879 is a motorcycle in which the dedicated brake means is not provided, application of the transmission including the clutch according to JP2002-021879 is limited to motorcycles including a gear transmission that is not controlled automatically, i.e., a so-called MT (manual transmission).

Vehicles including a centrifugal clutch and springs for urging the clutch into an engaged state are described in JP 04-316724 A, DE 14 80 686 A1 and JP 61-024834 A.

### Summary

It is an object of the invention to provide a centrifugal clutch enabling stable parking in a sloped road only by carrying out a gear input operation without using a parking brake, and a motorcycle including the centrifugal clutch.

This object is achieved by a centrifugal clutch according to claim 1, and a motorcycle (1) according to claim 9.

The present invention provides a centrifugal clutch and a motorcycle including a centrifugal clutch working as means that transmits a drive force generated by an engine. The centrifugal clutch includes a clutch operator that causes engagement or disengagement of the centrifugal clutch; a driving-side rotator including a first plate; a driven-side rotator including a second plate opposite to the first plate in a predetermined direction; a pressure plate that rotates with the driving-side rotator and that moves in the predetermined direction, thereby to cause the first plate and the second plate to contact with each other; and a centrifugal weight that moves to a radially outer side of the pressure plate by an amount of movement corresponding to a magnitude of a centrifugal force to thereby press the pressure plate in a direction causing the first plate and the second plate to contact with each other by using a force corresponding to the amount of movement. The pressure plate causes the first plate and the second plate to contact with each other even when the engine is in a stopped state so that part of the torque of the driving-side rotator is transmitted from the first plate to the driven-side rotator via the second plate.

According to the above, the pressure plate causes the first plate and the second plate to contact with each other even when the engine is in a stopped state. Consequently, in the centrifugal clutch, the torque can be transmitted even when the engine is in a stopped state.

As described above, according to the present invention, there can be provided a centrifugal clutch enabling a stable parking in a sloped road only by carrying out a gear input operation without using a parking brake, and a motorcycle including the centrifugal clutch.

### Brief Description of the Drawings

Embodiments of the invention will be described hereinafter, by way of example only, with reference to the accompanying drawings in which:
Fig. 1 is a side view of a motorcycle;
Fig. 2 is a view showing a configuration of major elements of a power unit;
Fig. 3 is a cross-sectional view of a clutch;
Fig. 4 is a cross-sectional view of a drive mechanism;
Fig. 5(a) is a reverse side view of a second cam plate; Fig. 5(b) is an obverse side view of a ball plate; and Fig. 5(c) is an obverse side view of a first cam plate;
FIGS. 6(a) and 6(b) are each a front view of a servo mechanism;
Fig. 7a is a cross-sectional enlarged view of the clutch when an engine is in a stopped state;
Fig. 7b is a cross-sectional enlarged view of the clutch in an idling state;
Fig. 7c is a cross-sectional enlarged view of the clutch when the engine is in the driven state;
Fig. 8 is a view showing variations in a transmission torque of the clutch during the operation of the motorcycle;
Fig. 9 is a cross-sectional enlarged view of a clutch in Modified Example 1; and
Fig. 10 is a cross-sectional enlarged view of a clutch in Modified Example 2.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the appended claims.

### Detailed Description

A motorcycle including a centrifugal clutch according to an embodiment will be described in detail below with reference to the drawings. However, the motorcycle described below is simply an example for carrying out the present invention. A motorcycle of the present invention is not limited to a motorcycle 1 described herebelow. In the present specification, motorcycle refers to a motorcycle of the type whose vehicle body is inclined when making a turn. The motorcycle herein referred to is not limited to a motorcycle including two wheels, but may be a motorcycle including three or more wheels.

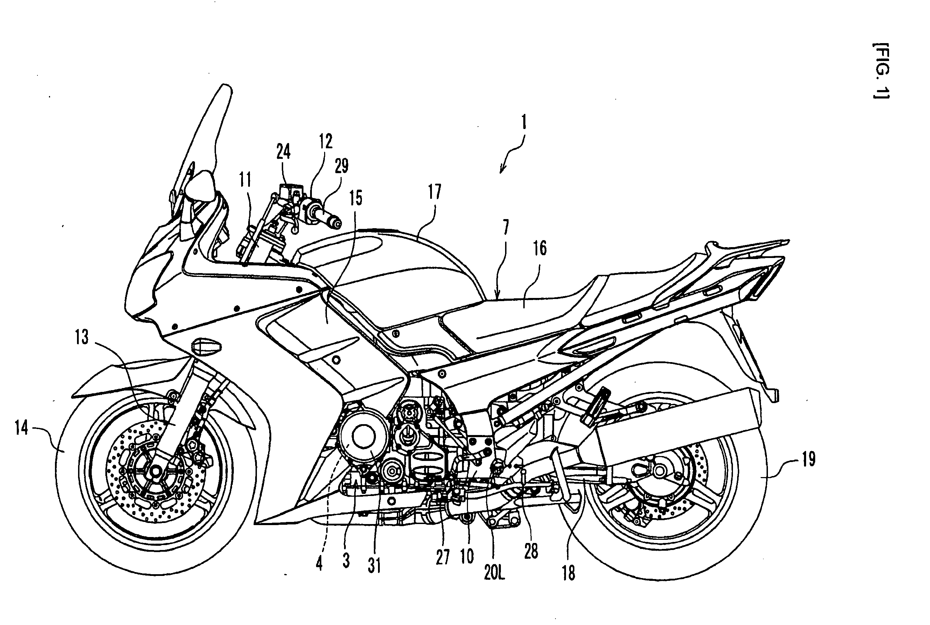

Fig. 1 is a left side view of a motorcycle 1 according to an embodiment. In the description below, the front-rear and left-right directions are referred to as directions as viewed from a rider mounted on a seat 16 described below.

As shown in Fig. 1, the motorcycle 1 includes a motorcycle body 7, a front wheel 14 provided on a front side of the motorcycle body 7, a rear wheel 19 provided on a rear side of the motorcycle body 7.

The motorcycle body 7 includes a vehicle body frame 10. The vehicle body frame 10 includes a head pipe 11. A handlebar 12 is provided to an upper end portion of the head pipe 11. In addition, the front wheel 14 is rotatably mounted to a lower end of the head pipe 11 via a front fork 13.

A power unit 3 is suspended from the vehicle body frame 10. In addition, a vehicle body cover 15 is mounted to the vehicle body frame 10. A seat 16 is disposed in a portion extending from a substantially central portion of the motorcycle body 7 towards the rear side thereof in the forward-rearward direction. A fuel tank 17 is disposed frontward of the seat 16.

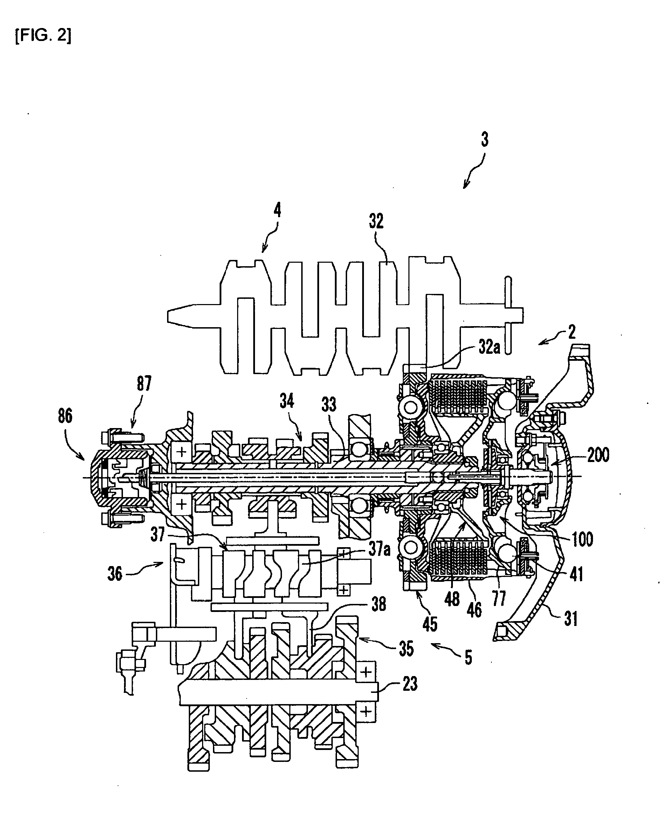

A rear arm 18 is pivotably supported on the vehicle body frame 10. The rear wheel 19 working as a drive wheel is rotatably mounted to a rear end portion of the rear arm 18. The rear wheel 19 is connected to an engine 4 (see Fig. 2) through a power transmission mechanism (not shown). Thereby, the power of the engine 4 is transmitted to the rear wheel 19, thereby the rear wheel 19 is rotated.

An acceleration grip (not shown) is provided as an accelerator operator on the right side of the handlebar 12. A left grip 29 is provided on the left side of the handlebar 12. Further, a clutch lever 24 to be operated as a clutch operator that is operated at the time of engaging or disengaging a clutch 2 (see Fig. 2) described below is provided on the left side of the handlebar 12 and on the front side of the left grip 29.

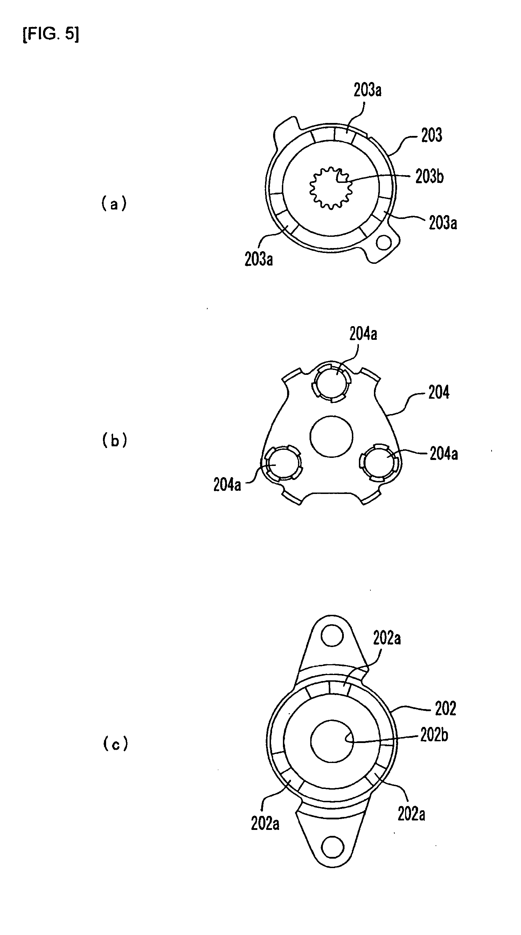

Footrests 20L are provided in forward-rearward central portions on both left and right sides of the motorcycle body 7. A shift pedal 27 that is operated for changing the transmission gear ratio of a transmission 5 (see Fig. 5) described below is provided on the left side of the motorcycle body 7 and slightly frontward of the left footrest 20L. A side stand 28 is provided on the left side of the motorcycle body 7 and downward of the shift pedal 27 and the footrest 20L.

Next, the configurations of major elements of the power unit 3 will be described herebelow with reference to Fig. 2. As shown in Fig. 2, the power unit 3 includes the engine 4, the transmission 5, and the clutch 2. In the present embodiment, while the type of the engine 4 is not specifically limited, the engine 4 is an engine of a water-cooled four-cycle parallel four-cylinder type.

Although not shown, the engine 4 includes four cylinders, pistons that reciprocate in the respective cylinders, and a crankshaft 32 connected to the respective pistons via connecting rods. The crankshaft 32 extends in the vehicle width direction. Reference numeral 31 denotes a crankcase 31.

As shown in Fig. 2, the crankshaft 32 is connected to the transmission 5 via the clutch 2. The transmission 5 includes a main shaft 33, a drive shaft 23, and a gear selection mechanism 36. The main shaft 33 is connected to the crankshaft 32 via the clutch 2. The main shaft 33 and the drive shaft 23 are disposed parallel to each other.

Multistage transmission gears 34 are mounted on the main shaft 33. In addition, a plurality of transmission gears 35 corresponding to the multistage transmission gears 34 are mounted on the drive shaft 23. Among the plurality of multistage transmission gears 34 and the plurality of transmission gears 35, a pair of gears selected engage with each other. Of the transmission gear 34 other than selected transmission gears 34 among the plurality of the transmission gears 34, and the transmission gear 35 other than selected transmission gears 35 among the plurality of the transmission gears 35, at least either transmission gear is rotatable with respect to the main shaft 33 or the drive shaft 23. Specifically, at least either of the unselected transmission gears 34 or the unselected transmission gears 35 are configured to run idly with respect to the main shaft 33 or the drive shaft 23. In other words, rotation transmission between the main shaft 33 and the drive shaft 23 is effected only through the selected transmission gear 34 and the selected transmission gear 35 that engage with each other.

Selection of the transmission gears 34, 35 is effected by the gear selection mechanism 36. More specifically, selection of the transmission gears 34, 35 is effected by a shift cam 37 of the gear selection mechanism 36. The plurality of cam grooves 37a are formed on an outer peripheral surface of the shift cam 37. Shift forks 38 are mounted to the respective cam grooves 37a. The respective shift forks 38 engage with predetermined transmission gears 34 and 35 of each of the main shaft 33 and drive shaft 23. By rotation of the shift cam 37, the plurality of shift forks 38 are, respectively, moved in the axial direction of the main shaft 33 by being guided by the cam grooves 37a. Thereby, gears to be engaged with each other are selected from among the transmission gears 34 and 35. More specifically, of the plurality of transmission gears 34 and 35, only a pair of gears in a position according to the rotation angle of the shift cam 37 is set to a spline-fixed state. Thereby, a transmission gear position is determined, and rotation transmission is effected at a predetermined transmission gear ratio between the main shaft 33 and the drive shaft 23 via the transmission gears 34 and 35. The gear selection mechanism 36 is operated with the shift pedal 27 shown in Fig. 1.

With this configuration, by fixing a predetermined pair of transmission gears 34, 35 to the main shaft 33 and the drive shaft 23 and driving the engine 4 with the clutch 2 being set to an engaged state, the motive power of the engine 4 is transmitted to the main shaft 33 via the clutch 2. Further, rotation transmission is effected at a predetermined transmission gear ratio between the main shaft 33 and the drive shaft 23 via the predetermined pair of transmission gears 34,35, and the drive shaft 23 is rotationally driven. When the drive shaft 23 is rotationally driven, a drive force is transmitted by a transmission mechanism (not shown), such as a chain connecting the drive shaft 23 and the rear wheel 19, thereby to rotate the rear wheel 19. In the present embodiment, a power transmission mechanism interconnecting the engine 4 and the rear wheel 19 is configured to include, for example, the clutch 2, the transmission 5, and a transmission mechanism (not shown), such as a chain.

In the present embodiment, the clutch 2 is configured by a wet multi-plate frictional clutch. Further, the clutch 2 is a centrifugal clutch that is automatically engaged or disengaged at the time of starting or stopping, and is engaged or disengaged through the operation of the clutch lever 24 by a rider. With reference to FIGS. 2 to 4, the configuration of the clutch 2 will be described below in detail.

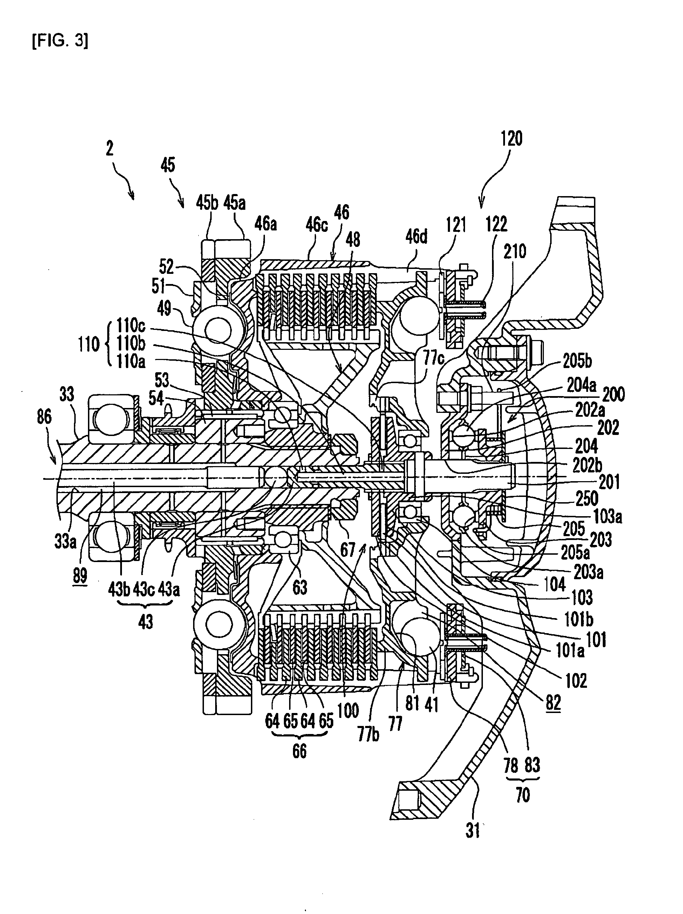

As shown in Fig. 3, the clutch 2 includes a clutch housing 46. The main shaft 33 extends through the clutch housing 46. The clutch housing 46 includes a housing body 46c. The housing body 46c is formed into a substantially cylindrical shape with one end closed by a bottom portion 46a. The main shaft 33 is inserted to extend through a bottom portion 46a of the housing body 46c. A plurality of pairs of arms 46d are provided to the housing body 46c. The respective arms 46d extend outward in the vehicle width direction from the bottom portion 46a.

As shown in Fig. 3, the vehicle width direction is the left-right or lateral direction. In the present embodiment, the clutch 2 is disposed on the right side of the main shaft 33, such that the outer side in the vehicle width direction is the right side, and the inner side in the vehicle width direction is the left side. The outer and inner sides in the vehicle width direction herebelow will simply be referred to as the right and left sides, respectively.

A scissors gear 45 is mounted to the clutch housing 46. The scissors gear 45 includes two gears 45a, 45b, a spring 49, and two plates 51, 52. The gear 45a and the gear 45b are located between the two plates 51, 52. The two plates 51, 52 are fixed to each other with fasteners, such as rivets and screws with respect to the axial direction of the main shaft 33. Thereby, two gears 45a, 45b are substantially fixed to each other with respect to the axial direction of the main shaft 33. In addition, the gear 45a and the gear 45b are relatively rotatable with respect to the rotation direction.

The gear 45a and the gear 45b are equal to each other in the number of teeth. The gear 45a and the gear 45b are formed in such a manner that the respective teeth thereof are disposed alternately to each other with respect to the circumferential direction. The spring 49 is provided between the gear 45a and the gear 45b. Hence, a tortional torque is exerted by the spring 49 on the gear 45a and the gear 45b. Thereby, varying torques of the engine 4 are absorbed.

The gear 45a of the scissors gear 45 is in engagement with a gear 32a (see Fig. 2) of the crankshaft 32. Further, the gear 45a of the scissors gear 45 is relatively non-rotatably fixed to the bottom portion 46a of the clutch housing 46. With this configuration, the gear 45a of the scissors gear 45 and the clutch housing 46 are integrally rotated in association with the rotation of the crankshaft 32.

A needle bearing 53 and a spacer 54 fixed non-rotatably with respect to the main shaft 33 are disposed between the scissors gear 45 and the main shaft 33. The needle bearing 53 enables the scissors gear 45 to be rotatable with respect to the main shaft 33. More specifically, the rotation of the scissors gear 45 is not directly transmitted to the main shaft 33.

A clutch boss 48 is fixed with a nut 67 to be non-rotatable with respect to the main shaft 33. More specifically, the clutch boss 48 rotates with the main shaft 33. Further, a thrust bearing 63 is disposed between the clutch boss 48 and the scissors gear 45. Thereby, the scissors gear 45, a needle bearing 53, and a spacer 54 are regulated by the thrust bearing 63 so that they do not come close to the clutch boss 48 beyond a predetermined distance. More specifically, the scissors gear 45, the needle bearing 53, and the spacer 54 are regulated in movement to the clutch boss 48 side with respect to the axial direction of the main shaft 33.

A plurality of friction plates 64 are disposed in the interior of clutch housing 46. The respective friction plates 64 are fixed to the clutch housing 46 with respect to the rotation direction of the main shaft 33. Hence, the plurality of friction plates 64 rotate with the clutch housing 46. The respective friction plates 64 are displacable with respect to the axial direction of the main shaft 33. Hence, the distance between the mutually adjacent friction plates 64 is variable.

The plurality of friction plates 64 are arranged in the axial direction of the main shaft 33. Clutch plates 65 are each disposed between a respective one of the mutually adjacent friction plates 64. A respective one of the clutch plates 65 opposes the respective one of the adjacent friction plates 64. The respective clutch plates 65 are fixed to the clutch boss 48 with respect to the rotation direction of the main shaft 33. Hence, the plurality of clutch plates 65 rotate with the clutch boss 48. The respective clutch plates 65 are displaceable with respect to the axial direction of the main shaft 33. Hence, distance between the mutually adjacent clutch plates 65 is variable.

In the present embodiment, a plate set 66 is configured by the plurality of friction plates 64 and the plurality of clutch plates 65.

A pressure plate 77 is disposed on the right side of the main shaft 33. The pressure plate 77 is formed into a substantially circular disc shape. A sub-clutch 100 described below is provided in a central portion of the pressure plate 77. An outer end portion of the pressure plate 77 in the radial direction engages with the arms 46d. Thereby, the pressure plate 77 is not rotatable with respect to the clutch housing 46, but rotates with the clutch housing 46.

A pressing portion 77b protruding towards the plate set 66 side is formed in a portion on the radially outer side of the pressure plate 77. The pressing portion 77b faces a rightmost friction plate 64 of the plate set 66. When the pressure plate 77 moves leftward, the pressing portion 77b leftwardly presses the plate set 66. Consequently, the friction plates 64 and clutch plates 65 of the plate set 66 are even more strongly press-contacted with each other.

Further, cam surfaces 81 for supporting respective roller weights 41 are formed on a surface on the side opposite to the plate set 66 in a portion on the radially outer side of the pressure plate 77. Thus, the plurality of cam surfaces 81 and the plurality of roller weights 41 are provided in the circumferential direction. The plurality of cam surfaces 81 are radially disposed about the axial center of the main shaft 33. The respective cam surfaces 81 are rightwardly tapered towards the radial outside.

A roller retainer 78 is disposed rightwardly of the pressure plate 77. The roller retainer 78 is formed into a ring-band shape as viewed from the axial direction of the main shaft 33. The roller retainer 78 faces the cam surfaces 81 of the pressure plate 77. Thereby, gaps 82 that are narrowed towards the radially outer side of the main shaft 33 are formed with the cam surfaces 81 and the roller retainer 78.

Similarly as in the case of the pressure plate 77, a radially outer end portion of the roller retainer 78 engages with the plurality of arms 46d. Thereby, the roller retainer 78 is non-rotatable with respect to the clutch housing 46. In other words, the roller retainer 78 rotates with the clutch housing 46. On the other hand, the roller retainer 78 is displaceable with respect to the clutch housing 46 in the axial direction of the main shaft 33. Further, spring holders 122a of elastic members 122 described below are fixed to the roller retainer 78.

The roller retainer 78 is leftwardly urged by a disc spring 83 working as an urging member. In other words, the roller retainer 78 is urged by the disc spring 83 towards the plate set 66 side. The roller retainer 78 and the disc spring 83 constitute an abutting member 70 that presses the roller weights 41 towards the cam surfaces 81 side.

The roller weights 41 are respectively disposed in a plurality of gaps 82. The respective roller weights 41 are pivotally rotated in operative association of the clutch housing 46, and are moved over the cam surfaces 81 towards the radially outer side by centrifugal force generated during the pivotal rotation. Then, upon receipt of reaction force from the abutting member 70, the roller weights 41 press the pressure plate 77 towards the plate set 66 side.

While described further below, in the present embodiment, the pressure plate 77 is configured to press-contact with the plate set 66 even in an idling state. Thereby, in the present embodiment, even in the idling state, the clutch 2 is set to a partial clutch engagement state and a drive force sufficient for a reduced speed driving is transmitted to the rear wheel 19. Further, in the present embodiment, the pressure plate 77 presses the plate set 66 into contact even in the state where the engine 4 is stopped and the roller weights 41 do not press the pressure plate 77 towards the plate set 66 side. Thereby, in the present embodiment, the clutch 2 is set to the engaged state even when the engine 4 is in a stopped state. Hence, in the state in which the engine 4 is stopped, the motorcycle 1 can be parked as if a brake is being applied, without operating a brake mechanism.

In the case of a low rotation speed of the crankshaft 32, the rotation speed of the clutch housing 46 is also low. Hence, the centrifugal force exerted on the roller weights 41 are relatively small, and the roller weights 41 are located relatively inward. Thereby, the force of the roller weights 41 for leftwardly pressing the pressure plate 77 is reduced. As a consequence, the degree of press-contact of the plate set 66 is reduced, and the torque transmittable from the clutch housing 46 to the clutch boss 48 becomes relatively small.

On the other hand, when the rotation speed of the crankshaft 32 becomes relatively high, the rotation speed of the clutch housing 46 also becomes relatively high. Hence, as the rotation speed of the clutch housing 46 increases, the centrifugal force exerted on the roller weights 41 increases. Then, when the centrifugal force exerted on the roller weights 41 reaches a predetermined value or greater, the roller weights 41 move outward. Thereby, the pressure plate 77 is pressed by the roller weights 41 towards the left side and is moved thereby to the plate set 66 side. As a consequence, the plate set 66 is relatively strongly press-contacted, and hence the torque transmittable from the clutch housing 46 to the clutch boss 48 is relatively increased.

In the present embodiment, although the clutch 2 is the centrifugal clutch, even when the engine 4 is in a stopped state, the clutch 2 can be set to the clutch-engaged state. More specifically, the clutch 2 includes a mechanism that sets a state where a brake is applied to the motorcycle 1. Hence, even when the engine 4 is in a stopped state, the clutch 2 is capable of transmitting the torque. The mechanism mentioned above will be referred to as a parking brake mechanism 120. The parking brake mechanism 120 includes an elastic member retainer 121 described below and the elastic member 122.

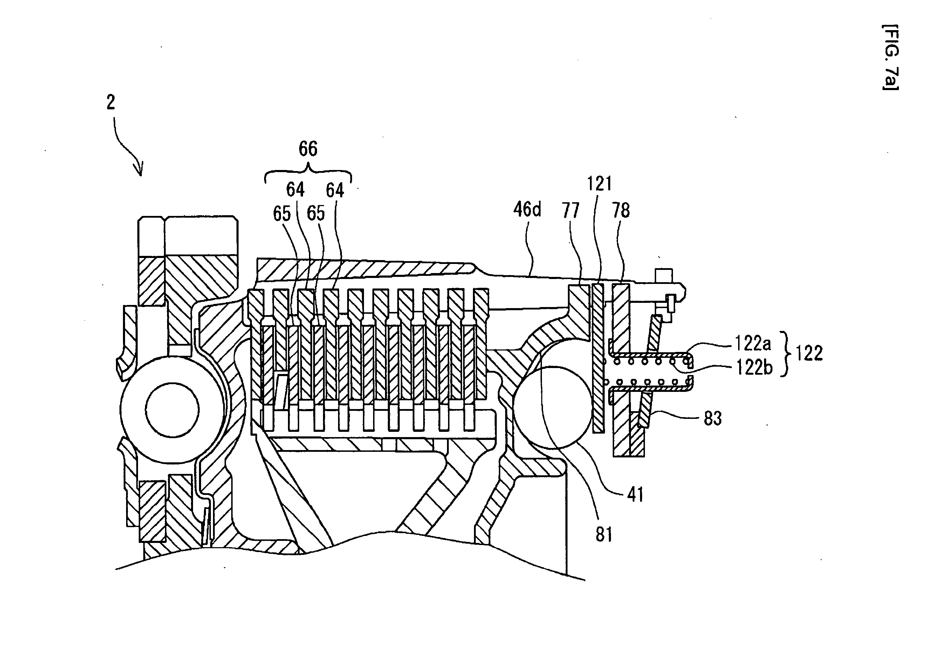

As shown in Fig. 7(a), the elastic member retainer 121 is disposed between the pressure plate 77 and the roller retainer 78. The elastic member retainer 121 is a planar plate, and is formed into a ring-band shape as viewed from the axial direction of the main shaft 33. In addition, the elastic member retainer 121 is engaged in an outer end portion thereof with the arm 46d. Hence, the elastic member retainer 121 is not rotatable relative to the clutch housing 46, but rotates with the clutch housing 46.

Further, the spring holders 122a are fixed to the roller retainer 78 disposed in a right side of the elastic member retainer 121. The spring holders 122a have a tubular shape. As shown in Fig. 7(a), the spring holder 122a extends through the roller retainer 78 and the disc spring 83, and is fixed to the roller retainer 78. Through-holes (not shown) of each of the roller retainer 78 and the disc spring 83 have a shape analogous to, for example, the cross-section of the tube of the spring holder 122a. The sizes of the respective through-holes are not specifically limited. The sizes of the respective through-holes can be arbitrary as long as a function that allows the roller retainer 78 to support the disc spring 83, and the disc spring 83 to urge the roller retainer 78 onto the plate set 66, and the like is maintained.

Further, a spring 122b is fixed to the elastic member retainer 121. The spring 122b is a coil spring. While one end of the spring 122b is fixed to the elastic member retainer 121, as described above, the other end on the opposite side is situated in contact with a tube head portion of the spring holder 122a. According to the present embodiment, the spring 122b is contained into the interior the tube of the spring holder 122a fixed to the roller retainer 78 in a contracted or pressed state with its length shorter than its natural length. More specifically, the spring 122b leftwardly presses the elastic member retainer 121 with the use of urging force in the spring expansion direction. The number of coil turns of the spring 122b is not specifically limited. Further, while, in the present embodiment, the spring 122b is formed as a coil spring, the type of the spring is not specifically limited. A combined unit of the spring holder 122a and the spring 122b is herein referred to as the elastic member 122 for the sake of convenience.

Fig. 7(a) is a cross-sectional enlarged view of the clutch 2 in the state in which the engine 4 is stopped. The respective roller weights 41 disposed on the cam surfaces 81 of the pressure plate 77 are constantly in contact with the elastic member retainer 121 irrespective of whether the engine 4 is in the operation state or stopped state. Further, the roller retainer 78 is leftwardly urged by the disc spring 83, the parking brake mechanism 120 presses the elastic member retainer 121 to the respective roller weights 41 by use of the urging force of the spring 122b. The roller weights 41 press the pressure plate 77 to the plate set 66 through the respective cam surfaces 81. Upon receipt of the centrifugal force by the rotation of the main shaft 33, the respective roller weights 41 move to the radially outer side of the pressure plate 77. Thereby, a change occurs in the state of contact between the respective roller weights 41 and the elastic member retainer 121.

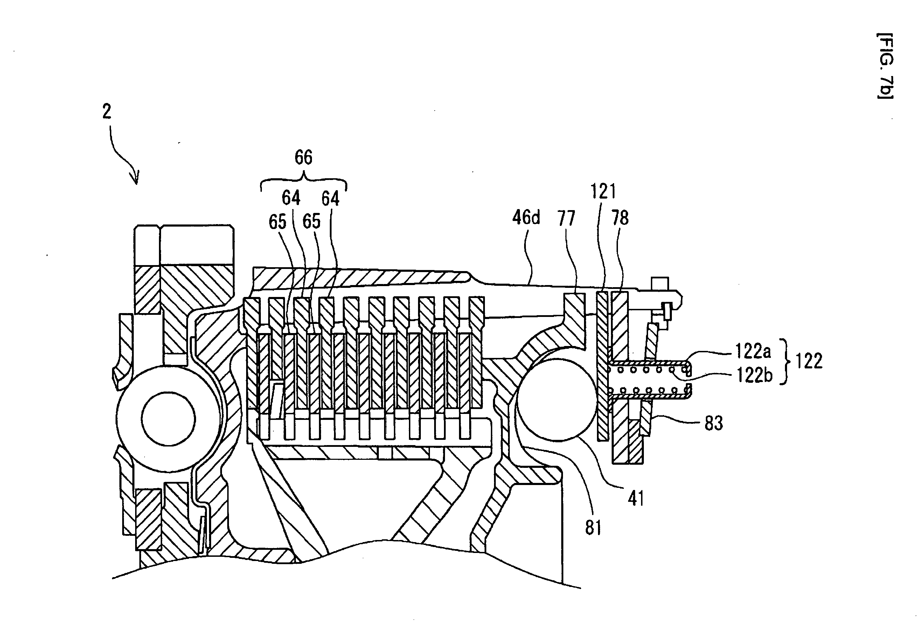

Fig. 7(b) shows a state where the engine 4 is started. In this event, the engine 4 is in an idling state. In the state where the engine 4 is stopped as shown in Fig. 7(a), the respective roller weights 41 move toward a centrifugal direction (radially outer side of the pressure plate 77) along the cam surfaces 81, upon receipt of the centrifugal force through the rotation of the main shaft 33. The cam surfaces 81 are each rightwardly tapered towards the radially outer side, and the roller weights 41 rightwardly move the elastic member retainer 121. Rightwardly moved by the roller weights 41, the elastic member retainer 121 rightwardly presses the spring 122b. Further, while rightwardly moving, the elastic member retainer 121 contacts with the roller retainer 78 with the spring holder 122a being sandwiched therebetween. The roller retainer 78 and the elastic member retainer 121 thus brought into contact with each other receive the urging force of the disc spring 83 in the leftward direction. Then, with the urging force of the disc spring 83, the roller retainer 78 and the parking brake mechanism 120 leftwardly press the pressure plate 77 via the roller weights 41.

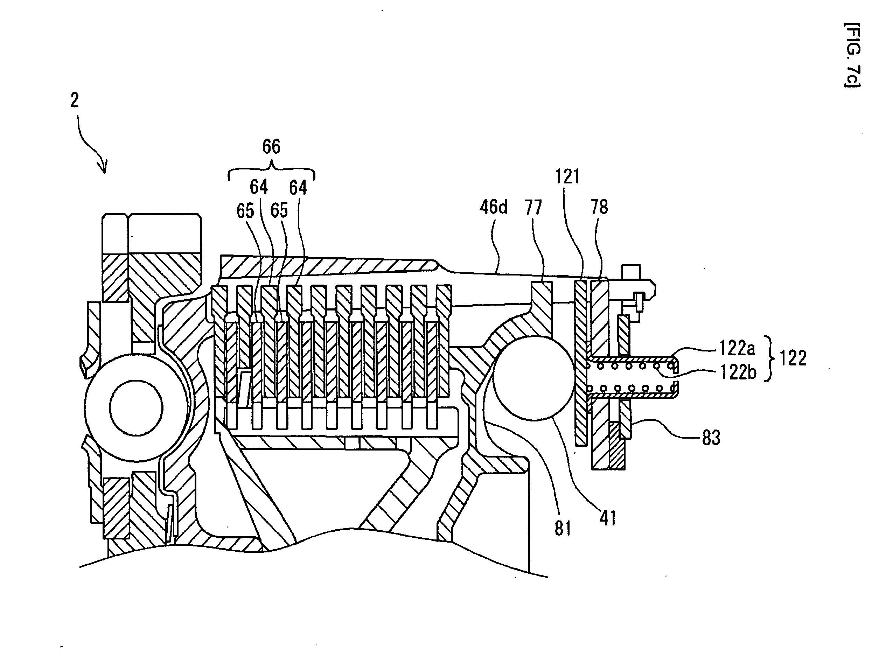

Fig. 7(c) shows a state where the rotation of the engine 4 has further increased than in the idling state. In this event, upon receipt of the centrifugal force, the respective roller weights 41 are regulated in the movement in the centrifugal direction by the cam surfaces 81 on the radially outer side of the pressure plate 77. Hence, even in the case where the rotation of the engine 4 is further increased, the positions of the respective roller weights 41 having received the centrifugal force remain unchanged from the position shown in Fig. 7(c).

As shown in Fig. 3, the clutch 2 according to the present embodiment includes a sub-clutch 100. The sub-clutch 100 includes a friction plate 101, a first pressing plate 102 opposing a left side face 101a (referred to as a first friction face, herebelow) of the friction plate 101, and a second pressing plate 103 opposing a right side face 101b (referred to as a second friction face, herebelow) of the friction plate 101.

The friction plate 101 is in engagement with the pressure plate 77 so as to rotate with the pressure plate 77. More specifically, a slide arm 77c is formed on the pressure plate 77. In addition, a groove (not shown) is formed on the radially outer side of the friction plate 101. The groove of the friction plate 101 slidably engages with the slide arm 77c, and hence the friction plate 101 rotates with the pressure plate 77.

The first pressing plate 102 is fixed to a short push rod 43a. Hence, the first pressing plate 102 freely moves with the short push rod 43a in the axial direction. Further, the first pressing plate 102 rotates with the short push rod 43a.

The second pressing plate 103 is serration-engaged with the short push rod 43a. Hence, while rotating with the short pushrod 43a, the second pressing plate 103 relatively moveable in the axial direction with respect to the short pushrod 43a. The second pressing plate 103 includes a boss portion 103a extending to the right side. The boss portion 103a rotatably supports the pressure plate 77 via a bearing 104. Thereby, the second pressing plate 103 and the pressure plate 77 are relatively rotatable to each another. Further, the configuration is such that the second pressing plate 103 and the pressure plate 77 integrally move.

When the short pushrod 43a rightwardly moves, the first pressing plate 102 also rightwardly moves. Then, the first pressing plate 102 presses the friction plate 101 to the second pressing plate 103 side. As a consequence, the friction plate 101 is interposed between the first and the second pressing plates 102 and 103. Thereby, a torque of the pressure plate 77 is transmitted to the first and the second pressing plates 102 and 103 by way of the friction plate 101, and the torque is applied to the first and the second pressing plates 102 and 103.

As described further below, a through-hole 33a is formed in the interior of the main shaft 33. The short pushrod 43a, a ball 43c, and a long pushrod 43b of a push mechanism 43 are inserted into the through-hole 33a. A clearance 89 between, for example, an inner wall of the through-hole 33a and the long pushrod 43b is used as an oil supply path for supplying oil to the clutch 2.

Further, an oil supply path 110 for guiding oil in the clearance 89 to the sub-clutch 100 is formed in the short pushrod 43a. The oil supply path 110 is configured to include an oil introduction path 110a formed in a left portion of the short pushrod 43a, an oil path 110b formed in a central portion of the short pushrod 43a, and an oil guide-out path 110c formed in a right portion of the short pushrod 43a. The oil introduction path 110a is a hole extending in the radial direction, and is connected to the oil path 110b extending in the axial direction. An outlet of the oil guide-out path 110c, that is, an opening on the radially outer side of the oil guide-out path 110c, is open towards the first friction face 101a and the second friction face 101b. Hence, the oil in the oil supply path 110 is supplied towards the first friction face 101a and the second friction face 101b.

As shown in Fig. 3, the clutch 2 according to the present embodiment includes a servo mechanism 200. The servo mechanism 200 converts a part of the torque of the pressure plate 77 into a force for disengaging the clutch 2, thereby to reduce the force necessary for disengaging the clutch 2. The servo mechanism 200 according to the present embodiment is configured to include a so-called ball cam. The servo mechanism 200 includes a slide shaft 201 fixed to the second pressing plate 103, a first cam plate 202, a second cam plate 203, a ball plate 204, and a coil spring 205 that urges the second cam plate 203 in a direction to be separated from the first cam plate 202. In a leading end side of the slide shaft 201, there is fixed a support plate 250 that contacts with a right side portion of the coil spring 205 to thereby support the coil spring 205.

As shown in Fig. 5(b), three balls 204a are rollably supported on the ball plate 204. The three balls 204a are equally disposed in a circumferential direction about the axial center of the slide shaft 201. However, the number of balls 204a supported on the ball plate 204 is not limited to three.

As shown in Fig. 5(c), a through-hole 202b is formed in a central portion of the first cam plate 202. As shown in Fig. 3, the slide shaft 201 is inserted into the through-hole 202b. The slide shaft 201 is axially moveable and rotatable with respect to the first cam plate 202. More specifically, the configuration is formed such that the first cam plate 202 does not rotate even when the slide shaft 201 rotates.

As shown in Fig. 5(a), a serration hole 203b is formed in a central portion of the second cam plate 203. The second cam plate 203 is in serration engagement with the slide shaft 201. Hence, while the second cam plate 203 is axially moveable with respect to the slide shaft 201, the second cam plate 203 rotates with the slide shaft 201.

One end 205b of the coil spring 205 is anchored to a pin 210 fixed to the crankcase 31. The other end 205a of the coil spring 205 is anchored to the second cam plate 203. Thereby, in association with the coil spring 205, the second cam plate 203 receives a torque so as to be rotated about the slide shaft 201. Further, in association with total urging forces of the disc spring 83 and the coil spring 205, the second cam plate 203 receives a slide force so as to be moved in the axial direction of the slide shaft 201.

A first cam surface 202a is formed on a right side surface (surface on the obverse side of the paper sheet in Fig. 5(c)) of the first cam plate 202. A second cam surface 203a is formed on a left side surface (surface on the observe side of the paper sheet in Fig. 5(a)) of the second cam plate 203. The first and the second cam surfaces 202a, 203a are formed to cause the following operations. The balls 204a ride over from between the both cam surfaces 202a, 203a when the second cam plate 203 rotates in a predetermined direction, and the balls 204a are stored in between the cam surfaces 202a, 203a when the second cam plate 203 rotates in a direction opposite to the above. In other words, the both cam surfaces 202a, 203a are formed to cause the following operations. When the second cam plate 203 rotates in a predetermined direction in resistance to the total urging forces of the disc spring 83 and the coil spring 205, the both plates 202, 203 are pressed by the balls 204a to separate from each other, and the second cam plate 203 rightwardly moves. Further, the both cam surfaces 202a, 203a are formed such that, when the second cam plate 203 rotates in the opposite direction, the second cam plate 203 is leftwardly moved by the total urging forces of the disc spring 83 and the coil spring 205.

The coil spring 205 rightwardly urges the second cam plate 203. In addition, the disc spring 83 leftwardly urges the second cam plate 203 via the pressure plate 77 and the like. The urging force of the disc spring 83 for leftwardly urging the second cam plate 203 is greater than the urging force of the coil spring 205 for leftwardly urging the second cam plate 203. Hence, the entirety of the disc spring 83 and the coil spring 205 leftwardly urges the second cam plate 203, thereby to leftwardly press the pressure plate 77 via the balls 204a, the first cam plate 202, the slide shaft 201, the second pressing plate 103, and the bearing 104. More specifically, the entirety of the disc spring 83 and the coil spring 205 urges the pressure plate 77 towards the plate set 66. Thereby, even when the engine 4 is in the idling state, the pressure plate 77 is urged to bring the plate set 66 into press-contact.

Here, the idling state refers to the state where the engine 4 is in operation, and the acceleration grip (not shown) of the motorcycle 1 is closed. According to the present embodiment, the pressure plate 77 is constantly urged towards the plate set 66 by the entirety of the parking brake mechanism 120, the disc spring 83, and the coil spring 205. Thereby, even in the idling state, the friction plates 64 and the clutch plates 65 contact with each other and thereby transmit part of the rotational drive force while sliding. That is, the so-called partial clutch engagement state is set even in the idling state.

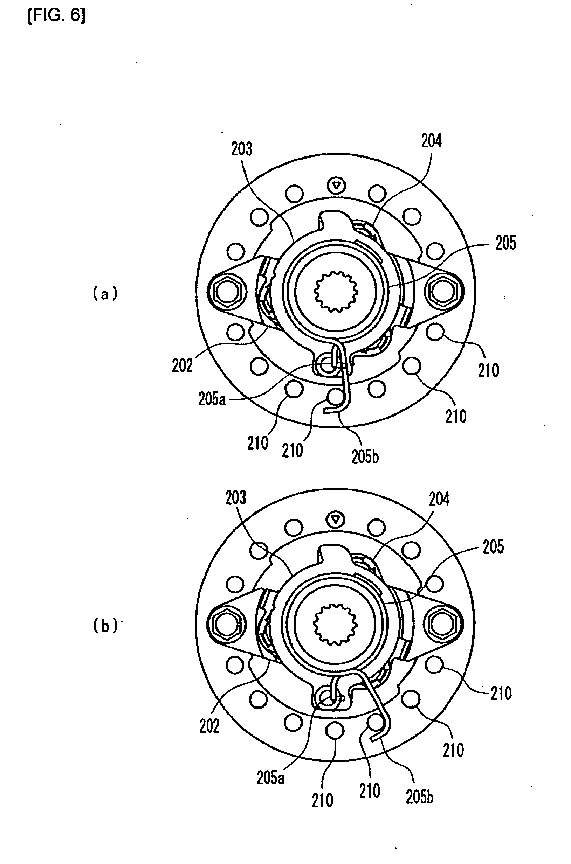

As shown in Figs. 6(a) and 6(b), the clutch 2 includes a plurality of pins 210 disposed circumferentially about a rotational center of the pressure plate 77 (i.e., the center of the coil spring 205). These pins 210 are formed to enable the one end 205b of the coil spring 205 to be anchored. Hence, the urging force of the coil spring 205 can be regulated by appropriately selecting a pin 210 for anchoring the one end 205b of the coil spring 205. For example, the pin 210 for anchoring the one end 205b of the coil spring 205 is changed from a pin 210 shown in Fig. 6(a) to a pin 210 shown in Fig. 6(b), thereby enabling increasing the urging force of the coil spring 205 against the pressure plate 77.

A clutch release mechanism 86 is provided in the clutch 2 of the present embodiment. Upon a rider operation of the clutch lever 24, the clutch release mechanism 86 forcibly releases the press-contact state of the plate set 66. The clutch release mechanism 86 makes it possible to effect the disengagement of the clutch 2 through a manual operation of the rider of the motorcycle 1.

As described above, in the motorcycle 1 according to the present embodiment, the clutch 2 is configured such that the partial clutch engagement state is set even in the idling state. Further, in the motorcycle 1 according to the present embodiment, the clutch 2 is configured so as to be set to the engaged state even when the engine 4 is in a stopped state. However, the clutch 2 in any one of the partial clutch engagement state and the engaged state can be disengaged by the clutch release mechanism 86.

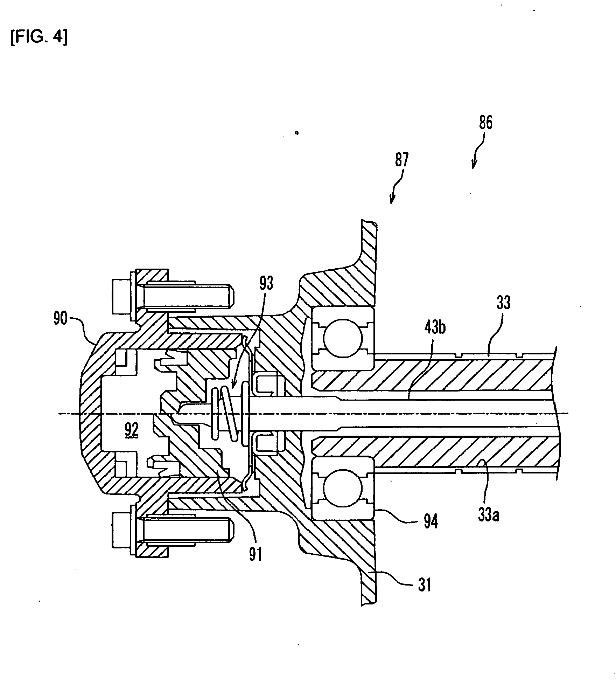

The clutch release mechanism 86 includes the push mechanism 43 (see Fig. 3) and a drive mechanism 87 (see Fig. 4) that drives the push mechanism 43. As shown in Fig. 3, the push mechanism 43 includes the short pushrod 43a, the long pushrod 43b, and ball 43c interposed between the short pushrod 43a and the long pushrod 43b. The through-hole 33a is formed in the interior of the main shaft 33, and the push mechanism 43 is disposed in the interior of the through-hole 33a. The through-hole 33a further works as an oil supply hole for supplying oil to, for example, respective slide portions of the clutch 2. More specifically, oil is supplied to the respective slide portions of the clutch 2 by way of the clearance 89 formed between the inner wall of the through-hole 33a and the push mechanism 43.

A right side end of the short pushrod 43a protrudes from the main shaft 33, and is fitted to the first pressing plate 102 of the sub-clutch 100. Hence, upon engagement with the sub-clutch 100, the short pushrod 43a rotates integrally with the pressure plate 77. Further, upon engagement of the sub-clutch 100 and the clutch 2, the short pushrod 43a rotates with the clutch housing 46. However, the long pushrod 43b does not rotate with the main shaft 33. Hence, the ball 43c is provided between the short pushrod 43a and the long pushrod 43b, thereby to reduce a slide resistance between the short pushrod 43a and the long pushrod 43b.

Fig. 4 is a cross-sectional view showing the pushrod drive mechanism 87. As shown in Fig. 4, a left side end of the long pushrod 43b is located leftward of a left side end of the main shaft 33 and is extended to the drive mechanism 87. A portion below the axial center of the main shaft 33 of Fig. 4 shows the state where the clutch release mechanism 86 is not driven. In other words, the portion below the axial center of the main shaft 33 of Fig. 4 shows the state where the push mechanism 43 is located relatively leftward, and the pressure plate 77 is not rightwardly displaced by the push mechanism 43. On the other hand, a portion above the axial center of the main shaft 33 of Fig. 4 shows the state where the clutch release mechanism 86 is driven. In other words, the portion above the axial center of the main shaft 33 of Fig. 4 shows the state where the push mechanism 43 is located relatively rightward, and the pressure plate 77 is rightwardly displaced by the push mechanism 43.

As shown in Fig. 4, the drive mechanism 87 includes a cylinder 90 and a piston 91. The piston 91 is slidable in the axial direction of the main shaft 33 with respect to the cylinder 90. The piston 91 is mounted to the long pushrod 43b. Hence, when the piston 91 slides, the long pushrod 43b also moves in the axial direction of the main shaft 33.

An operation chamber 92 is formed between the piston 91 and the cylinder 90. The operation chamber 92 is filled with oil.

A helical compression spring 93 is disposed between the piston 91 and the crankcase 31. The piston 91 is leftwardly urged by the helical compression spring 93. More specifically, the piston 91 is urged in the direction that the push mechanism 43 is leftwardly displaced to be engaged with the clutch 2. Hence, when the operation of the clutch lever 24 (see Fig. 1) is cancelled by the rider of the motorcycle 1, the push mechanism 43 automatically moves leftward.

Operation of the clutch 2 will be described herebelow. To begin with, operation of disengagement of the clutch 2 will be described.

When the rider of the motorcycle 1 holds the clutch lever 24 (see Fig. 1), the internal pressure of the operation chamber 92 of the drive mechanism 87 rises. Thereby, the piston 91 rightwardly moves, and also the long pushrod 43b rightwardly moves. Then, the ball 43c and the short pushrod 43a also rightwardly move, and first pressing plate 102 of the sub-clutch 100 rightwardly moves. Thereby, the friction plate 101 of the sub-clutch 100 is sandwiched between the first and the second pressing plates 102 and 103 and the sub-clutch 100 is set to an engaged state. As a consequence, the slide shaft 201 of the servo mechanism 200 rotates with the pressure plate 77 in the predetermined direction.

Upon rotation of the slide shaft 201 in the predetermined direction, also the second cam plate 203 of the servo mechanism 200 rotates in the same direction. Then, the balls 204a of the ball plate 204 ride over from between the first cam surface 202a and the second cam surface 203a, and the second cam plate 203 is rightwardly pressed by the balls 204a. Thereby, also the slide shaft 201 is rightwardly pressed. As a consequence, the short pushrod 43a rightwardly pushes or presses the pressure plate 77 via the first pressing plate 102 and the friction plate 101, the slide shaft 201 rightwardly pulls the pressure plate 77 via the second pressing plate 103 and the bearing 104. In this event, the pressure plate 77 rightwardly moves in response to the pressing force and the pulling force. This cancels a press-contact state of the plate set 66, thereby causing the clutch 2 to be disengaged.

The second cam plate 203 is regulated for rotation of a predetermined amount or more. Hence, in the state where the clutch 2 is disengaged, the friction plate 101 rotates with respect to the first and the second pressing plates 102 and 103. More specifically, the friction plate 101 slides with respect to the first and the second pressing plates 102 and 103. However, the oil is supplied to the first and the second friction faces 101a and 101b of the friction plate 101, so that wear of the friction plate 101 is inhibited.

Next, operation at the time of engagement of the clutch 2 will be described below.

At the time of engagement of the clutch 2, the clutch lever 24 held by the rider is released. This causes reduction in the internal pressure of the operation chamber 92 of the drive mechanism 87. Thereby, the piston 91 and the long pushrod 43b are leftwardly moved. Then, also the ball 43c and short pushrod 43a are leftwardly moved, and the first pressing plate 102 of the sub-clutch 100 is leftwardly moved. Thereby, the first pressing plate 102 of the sub-clutch 100 is separated by the friction plate 101. Further, the second pressing plate 103 becomes inhibited from being rightwardly pressed from the first pressing plate 102. Hence, the rightward pressing force against the slide shaft 201 is cancelled, and the second cam plate 203 having received the urging force of the coil spring 205 rotates in a reverse direction. Thereby, the second cam plate 203 and the slide shaft 201 are leftwardly moved. Consequently, also the second pressing plate 103 is leftwardly moved.

Further, since the rightward pressing force of the first pressing plate 102 is cancelled, the pressure plate 77 is leftwardly moved by urging forces of, for example, the disc spring 83. As a consequence, the pressure plate 77 presses the plate set 66 and the clutch 2 is engaged. In this event, the friction plate 101 of the sub-clutch 100 separates from the second pressing plate 103.

In the clutch 2 according to the present embodiment, the urging force received by the pressure plate 77 from the disc spring 83 varies depending on the radial positions of the roller weights 41. More specifically, in the case of a high rotation speed of the pressure plate 77, the roller weights 41 move outside of the radial direction. As a consequence, the roller weights 41 rightwardly move and cause a large deformation of the disc spring 83. Hence, since the disc spring 83 is largely deformed by roller weights 41 even without an increased elasticity coefficient of the disc spring 83 itself, the urging force received by the pressure plate 77 from the disc spring 83 is relatively increased. On the other hand, when the rotation speed of the pressure plate 77 is low, the roller weights 41 inwardly move in the radial direction. As a consequence, the roller weights 41 leftwardly move, and the amount of deformation decreases. Hence, the urging force received by the pressure plate 77 from the disc spring 83 becomes relatively small.

When the engine rotation speed is high, the plate set 66 has to be press-contacted by the pressure plate 77 with a large pressing force. In the clutch 2 according to the present embodiment, when the engine rotation speed increases, the roller weights 41 move to the radially outer side and the amount of deformation of the disc spring 83 increases. Hence, a sufficient amount of pressing force can be obtained even without increasing the elasticity coefficient of the disc spring 83. Hence, the elasticity coefficient of the disc spring 83, that is, spring capacity, can be restrained to be relatively small.

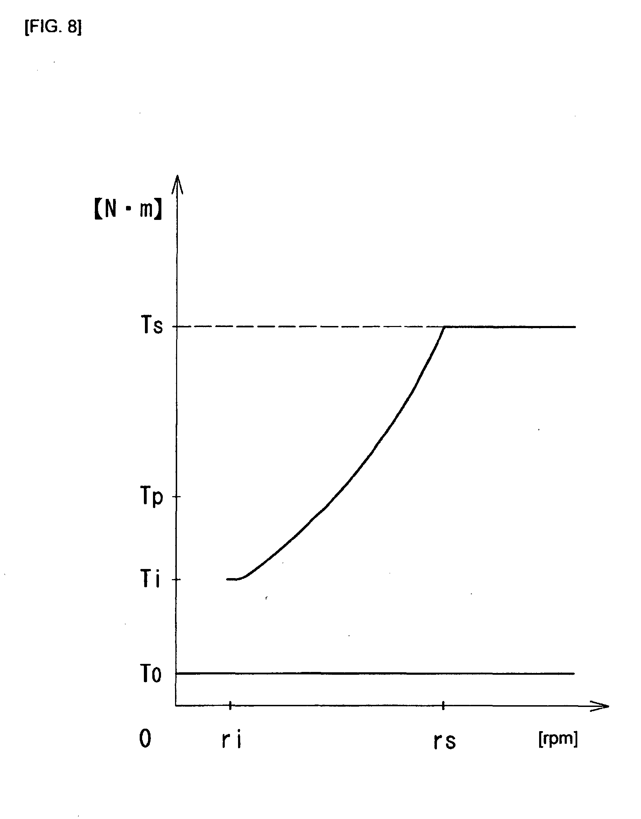

One example of a variation in torque being transmitted from the clutch 2 to the rear wheel 19 during the operation of the motorcycle 1 will be described herebelow with reference to FIGS. 7 and 8. As shown in Fig. 7(a), when the engine 4 is in the stopped state, the pressure plate 77 presses the plate set 66 via the elastic member 122. In this event, as shown in Fig. 8, a transmission torque T_{P} is generated in the clutch 2.

At the time of starting the engine 4 or at the time when the motorcycle 1 is started after the start of the engine 4, the operation of disengaging the clutch 2 is performed by use of the clutch lever 24. As shown in Fig. 8, a transmission torque to the rear wheel 19 in the disengaged state of the clutch 2 is denoted by To. The transmission torque To of the clutch 2 in this event does not become zero. The torque is transmitted because the oil to be supplied to the clutch 2 forms an oil film on the sub-clutch 100 and the like.

Further, as described above, the clutch 2 of the present embodiment is configured to be set to a partial clutch engagement state even when the engine 4 is in the stopped state. In such a partial clutch engagement state, the transmission torque is set to a magnitude at which the reduced speed driving can be performed through the appropriate operation of the clutch lever 24 without frequent iteration of the open operation and close operation of the acceleration grip. In the case of the motorcycle 1, a clutch transmission torque such as in the partial clutch engagement state is referred to as a necessary transmission torque for the sake of convenience. As shown in Fig. 8, a transmission torque of the clutch 2 at an arbitrary idling rotation speed rᵢ of the engine 4 is denoted by Ti. In this case, the magnitude of the transmission torque Tᵢ takes a value that is constantly greater than that of the necessary transmission torque. Further, regarding the idling rotation speed, the rotation speed is adjustable in the power unit 3. Also the transmission torque Tᵢ is changeable through adjustment of the idling rotation speed rᵢ. As described above, since the transmission torque Ti is greater than the necessary transmission torque, traveling at the idling rotation speed rᵢ is possible even when the clutch 2 is the centrifugal clutch.

In Fig. 8, a range between zero and the idling rotation speed rᵢ on the horizontal axis (rotation speed of the engine 4) indicates different variations in the transmission torque. The different variations are thus shown in the case of different order of operations of, for example, the clutch lever 24 and the shift pedal 27 at the time of starting the engine 4 from its stopped state. In Fig. 8, the variation in the transmission torque in the above-described area is not shown. In any case, however, the transmission torque is shown with the area in the range of between T₀ and T_{P} in the area described above.

As the rotation speed of the engine 4 is increased to be higher than the idling rotation speed ri, the transmission torque in the clutch 2 is increased corresponding to the rotation speed of the engine 4. However, as shown in Fig. 7(c), the centrifugal movement of the respective roller weights 41 having received the centrifugal force is regulated on the cam surface 81 on the radially outer side of the pressure plate 77. Hence, a leftward pressing force of the pressure plate 77 is applied as a force having a constant magnitude to press the friction plates 64 and the clutch plates 65. In the case where the centrifugal movements of the roller weights 41 are regulated, or more specifically, a rotation speed of the engine 4 when the roller weights 41 reach the radially outermost side of the pressure plate 77 of the cam surfaces 81, is denoted by rₛ. In Fig. 8, a transmission torque of the clutch 2 when the engine 4 reaches rₛ is denoted by Tₛ. Even in the case where the rotation speed of the engine 4 increases to be greater than rₛ, the pressing force of the pressure plate 77 for pressing the friction plates 64 and the clutch plates 65 is constant. Hence, the transmission torque Tₛ of the clutch 2 is indicated as constant value.

In the embodiment described above, the parking brake mechanism 120 utilizes the expansion direction of the coil spring as the direction of the urging force of the spring 122b. However, the direction of the urging force of the spring 122b is not limited to the expansion direction. Modified Example 1 will be described herebelow with reference to the case where the direction of the urging force of the spring 122b is altered. In Modified Example 1, the same numerals designate members or portions that exhibit the same effects as those in the embodiment described above.

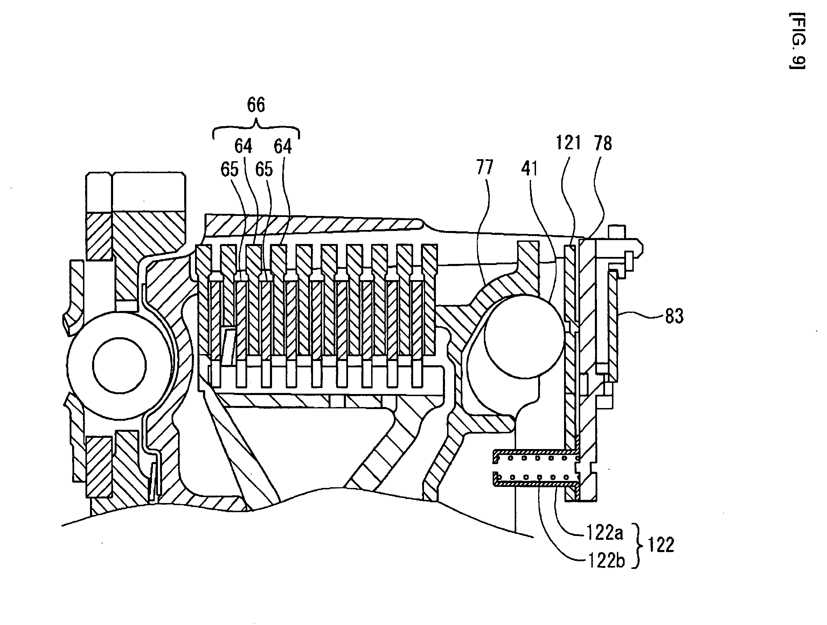

As shown in Fig. 9, an elastic member 122 of Modified Example 1 is disposed reversely in a left-right direction along the axial direction of the main shaft 33 with respect to the elastic member 122 shown in Fig. 3 or 7. Further, Fig. 9 shows a state of the clutch 2 in which the engine 4 is being driven. In Modified Example 1, the spring holders 122a are fixed not to the roller retainer 78 but to the elastic member retainer 121. Further, the spring 122b is fixed not to the elastic member retainer 121 but to the roller retainer 78. While one end of the spring 122b is, as described above, is fixed to the roller retainer 78, the other end on the opposite side is situated in contact with the tube head portion of the spring holder 122a. The spring holder 122a extends through the elastic member retainer 121. Each through-hole (not shown) of the elastic member retainer 121 has a shape analogous to the cross-section of the tube of the spring holder 122a, for example. The sizes of the respective through-holes are not specifically limited. The size of the respective through-holes can be an arbitrary as long as a function that allows the elastic member retainer 121 to support the elastic member 122, and the elastic member retainer 121 to receive the centrifugal force of the roller weights 41, and the like is maintained. The spring 122b is inserted into the interior of the tube of the spring holder 122a fixed to the elastic member retainer 121 in an expanded state with its length longer than its natural length. More specifically, the spring 122b leftwardly presses the roller retainer 78 with the use of urging force in the spring contraction direction. The roller retainer 78 and the elastic member retainer 121 are constantly in contact with each other with a bottom portion (not shown) of the spring holder 122a being sandwiched therebetween. By utilizing the force in the spring contraction direction of the spring 122b, the parking brake mechanism 120 brings the roller retainer 78 and the elastic member retainer 121 into contact with the roller weights 41. Further, the parking brake mechanism 120 leftwardly presses the pressure plate 77 via the roller weights 41, thereby to cause contact of the plate set 66.

In the case where the engine 4 has been started from its stopped state, the roller weights 41 having received the centrifugal force centrifugally move. Further, when the rotation speed of the engine 4 increases, the movement of the respective roller weights 41 on the radially outer side of the pressure plate 77 is regulated on the cam surface 81 on the radially outer side of the pressure plate 77. In this event, the roller retainer 78 and the elastic member retainer 121 both leftwardly receive the urging force of the disc spring 83. Consequently, the pressure plate 77 presses the friction plates 64 and the clutch plates 65 by using a leftward pressing force having a constant magnitude (see Fig. 8).

In the embodiment and Modified Example 1 described above, the elastic member 122 used in the parking brake mechanism 120 utilizes a coil spring. However, the elastic member 122 is not limited to the coil spring, and an equivalent operation can be carried out even with the elastic member 122 using leaf springs as described below. In Modified Example 2, the same numerals designate members or portions that exhibit the same effects as those in the embodiment described above.

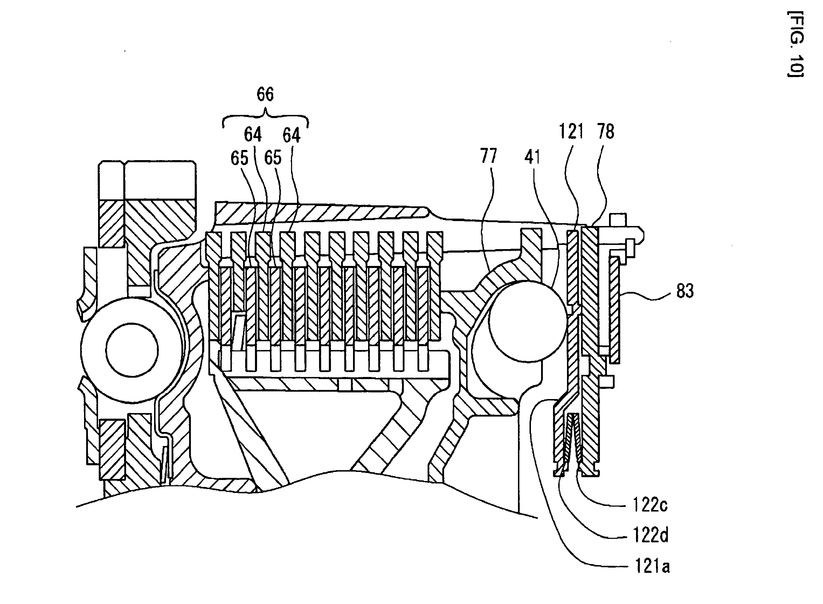

As shown in Fig. 10, an elastic member 122 in Modified Example 2 is a set of leaf springs. With the use of a plurality of leaf springs, the configuration is formed so that the friction plates 64 and the clutch plates 65 are brought into contact with each other even when the engine 4 is in a stopped state. Fig. 10 shows a sate in which the engine 4 is being driven. Further, a leaf spring 122c is fixed to the roller retainer 78. The elastic member retainer 121 includes a bent portion 121a so as not to hinder disposition positions of a leaf spring 122c and the leaf spring 122d. The leaf spring 122c and the leaf spring 122d respectively have urging forces in the directions that separate from each other. In other words, the leaf spring 122c leftwardly urges the leaf spring 122d and the elastic member retainer 121 using the urging force of the spring. The leaf spring 122d rightwardly urges the leaf spring 122c and the roller retainer 78 using the urging force of the spring. When the engine 4 is in the stopped state, in the parking brake mechanism 120, the elastic member retainer 121 leftwardly presses the pressure plate 77 via the roller weights 41 by using the mutually separating urging force of the leaf spring 122c and the leaf spring 122d.

In the case where the engine 4 has been started from its stopped state, the roller weights 41 centrifugally move. Further, when the rotation speed of the engine 4 increases, the movement of the respective roller weights 41 on the radially outer side of the pressure plate 77 is regulated on the cam surface 81 on the radially outer side of the pressure plate 77. In this event, the roller retainer 78 and the elastic member retainer 121 both leftwardly receive the urging force of the disc spring 83. In total, the leftward urging force of the leaf spring 122c, the rightward urging force of the leaf spring 122d, the leftward urging force of the disc spring 83, and the force of rightwardly pressing the elastic member retainer 121 in accordance with the centrifugal force of the respective roller weights 41 by use of the cam surface 81 are applied as a leftward urging force. More specifically, the pressure plate 77 presses the friction plates 64 and the clutch plates 65 by use of a leftward pressing force having a constant magnitude (see Fig. 8)

As described above, according to the present embodiments, although the clutch 2 is the centrifugal clutch, the friction plates 64 and the clutch plates 65 can be contacted with each other even when the engine 4 is in a stopped state. Hence, according to the clutch 2, the torque can be transmitted even when the engine 4 is in a stopped state. As such, at the time of parking in a sloped road, the motorcycle 1 can be stably parked by carrying out a gear input operation without using specific means, such as a parking brake.

Further, according to the present embodiments, the clutch 2 includes elastic members 122 and the disc spring 83 in the parking brake mechanism 120. In order that the friction plates 64 and the clutch plates 65 come into contact with each other even when the engine 4 is in a stopped state, the disc spring 83 and the elastic members 122 constantly press by using the urging force of the springs. Thus, the disc spring 83 and the elastic members 122 for constantly urging the pressure plate 77 towards the plate set 66 side even when the engine 4 is in a stopped state are provided. Consequently, the motorcycle 1 that easily exhibits the above-described effects can be provided.

In the present embodiments, the respective spring 122b is contained into the spring holder 122a in the contracted state with its length shorter than its natural length. In this event, the pressure plate 77 is pressed by utilizing the force in the expansion direction of the spring 122b. In this case, as compared with the case of using the contraction force of the spring 122b, an amount of expansion of the spring 122b to be longer than the natural length thereof does not have to be taken into account. Hence, the respective springs 122b can be disposed in a predetermined position without including the amount of expansion of the spring 122b to be longer than the natural length thereof. Consequently, gaps related to the disposition of the springs 122b in the interior of the clutch 2 can be effectively utilized.

According the present embodiments, in the clutch 2, the friction plates 64 and the clutch plates 65 are situated in contact with each other when the engine 4 is in the stopped state. However, the friction plates 64 and the clutch plates 65 can easily be shifted into the non-contact state. By setting the friction plates 64 and the clutch plates 65 to the non-contact state, the transmission torque of the clutch 2 can be reduced approximately to zero. For example, in a non-centrifugal clutch type multi-plate clutch, the friction plates 64 and the clutch plates 65 are constantly in contact with each other except for the time when the clutch is disengaged. Hence, in the clutch 2, the load on the plate set 66 can be reduced as compared with the case in the non-centrifugal clutch type multi-plate clutch. Further, in the clutch 2, wear of the plate set 66 can be prevented by the reduction of the load on the plate set 66. Further, at the time of traveling after engine has started, a wide transmission torque range including a range obtained by the reduction of the transmission torque can be used. More specifically, since an excessive load is not applied, comfortable traveling can be achieved.

In the present embodiments, the motorcycle 1 includes the clutch lever 24. The motorcycle 1 further includes the servo mechanism 200, the sub-clutch 100, and the push mechanism 43. At the time of clutch disengagement by the clutch lever 24, the servo mechanism 200 receives a torque from the pressure plate 77 and converts the torque into the force for moving the pressure plate 77 in the direction of separating the friction plates 64 and the clutch plates 65 from each another. The sub-clutch 100 includes the friction plate 101 provided to rotate with the pressure plate 77. The sub-clutch 100 further includes the pressure plates 102 and 103 that receive the torque from the friction plate 101 by being press-contacted with the friction plate 101 at the time of clutch disengagement and that move in the predetermined direction with the pressure plate 77. In response to the operation of the clutch lever 24, the push mechanism 43 causes the pressing plates 102 and 103 to be pressed against the friction plate 101. Further, the servo mechanism 200 causes reduction of the force necessary for manual engagement or disengagement operation of the clutch 2. Hence, in the motorcycle 1, the engagement or disengagement operation can easily be effected when necessary. Consequently, the transmission torque of the clutch 2 can easily be reduced, and effects described above can be obtained.

According to the present embodiments, the servo mechanism 200 is a ball cam mechanism. The ball cam mechanism combines the axial operation and the rotational operation. Hence, compared with a unidirectional operation mechanism, the ball cam mechanism is able to obtain a large operational area even in a predetermined limited space. Thereby, compared with the unidirectional operation mechanism, the drive force up to a large level can be transmitted. Consequently, use of the ball cam mechanism enables the achievement of the overall space saving for the clutch 2.

In the present embodiments, the ball 43c is provided in the push mechanism 43. With the ball 43c provided, the slide resistance between the short pushrod 43a and the long pushrod 43b in the push mechanism 43 is reduced. Hence, the clutch engagement or disengagement operation from the clutch lever 24 is smoothly transmitted to the pressure plate 77. Consequently, there can be provided the motorcycle including the clutch 2 in which smooth operation is performed at the time of clutch disengagement to thereby exhibit the effects described above.

In the present embodiments, the clutch 2 is a wet multi-plate frictional clutch. Since the clutch 2 is of the wet type, friction in the interior of the clutch 2 can be reduced. Further, when the clutch 2 is driven, wear of the interior of the clutch 2 including the plate set 66 and the sub-clutch 100 can be reduced.

As described above, the present invention is useful for motorcycles including a centrifugal clutch.

### Description of Reference Numerals

- 1: motorcycle
- 2: clutch (centrifugal clutch)
- 3: power unit
- 4: engine
- 19: rear wheel (drive wheel)
- 24: clutch lever 24 (clutch operator)
- 41: roller weight (centrifugal weight)
- 43: push mechanism
- 46: clutch housing (driving-side rotator)
- 48: clutch boss (driven-side rotator)
- 64: friction plate (first plate)
- 65: clutch plate (second plate)
- 70: abutting member
- 77: pressure plate
- 81: cam surface
- 100: sub-clutch
- 101: friction plate
- 102: first pressing plate
- 103: second pressing plate (pressing body)
- 120: parking brake mechanism
- 121: elastic member retainer
- 122: elastic member
- 122a: spring holder
- 122b: spring
- 122c: leaf spring
- 122d: leaf spring
- 200: servo mechanism
- 201: slide shaft (rotation shaft)
- 202: first cam plate
- 202a: first cam surface
- 203: second cam plate
- 203a: second cam surface
- 204a: cam ball
- 205: coil spring (elastic member)
- 205b: one end of coil spring
- 210: pin

## Claims

1. A centrifugal clutch (2) for a motorcycle (1) operable to transmit a drive force of an engine (4), the centrifugal clutch (2) including:
a driving-side rotator (46) including a first plate (64);
a driven-side rotator (48) including a second plate (65) opposite to the first plate (64) in a predetermined direction;
a pressure plate (77) arranged to rotate with the driving-side rotator (46) and to move in the predetermined direction, thereby to cause the first plate (64) and the second plate (65) to contact with each other;
a centrifugal weight (41) arranged to move to a radially outer side of the pressure plate (77) by an amount of movement corresponding to a magnitude of a centrifugal force to thereby press the pressure plate (77) in a direction causing the first plate (64) and the second plate (65) to contact with each other by using a force corresponding to the amount of movement,
wherein the pressure plate (77) causes the first plate (64) and the second plate (65) to contact with each other even when the engine (4) is in a stopped state;
a plurality of elastic members (83, 122, 122a, 122b) arranged to urge the pressure plate (77) towards the first plate side and the second plate (65) to thereby cause the first plate (64) and the second plate (65) to contact with each other even when the engine (4) is in a stopped state; and
a roller retainer (78) arranged to rotate with the driving-side rotator (46) and that is located on an opposite side of the first plate (64) and the second plate (65) via the pressure plate (77) with respect to the predetermined direction;
wherein the plurality of elastic members includes a clutch spring (83);
**characterized by**
an elastic member retainer (121) arranged to rotate with the driving-side rotator (46), that is located between the pressure plate (77) and the roller retainer (78) with respect to the predetermined direction, and that regulates movement of the centrifugal weight (41) with respect to the predetermined direction;
wherein the clutch spring (83) is located on an opposite side of the elastic member retainer (121) via the roller retainer (78) with respect to the predetermined direction,
wherein the plurality of elastic members includes a spring holder (122a) and a spring (122b),
wherein the spring holder (122a) has a shape as a tube including a tubular portion and a tube bottom portion,
wherein the spring (122b) is formed of a coil spring, is contained into an interior of the tube of the spring holder (122a),
wherein the tube bottom portion is fixed to the roller retainer (78) and the spring (122b) has one end side fixed to the elastic member retainer (121) and the other end side fixed to the spring holder (122a), or the tube bottom portion is fixed to the elastic member retainer (121) and the spring (122b) has one end side fixed to the roller retainer (78) and the other end side fixed to the spring holder (122a), and
wherein when in use the centrifugal clutch enables stable parking in a sloped road only by carrying out a gear input operation without using the parking brake.

2. A centrifugal clutch (2) for a motorcycle (1) operable to transmit a drive force of an engine (4), the centrifugal clutch (2) including:
a driving-side rotator (46) including a first plate (64);
a driven-side rotator (48) including a second plate (65) opposite to the first plate (64) in a predetermined direction;
a pressure plate (77) arranged to rotate with the driving-side rotator (46) and to move in the predetermined direction, thereby to cause the first plate (64) and the second plate (65) to contact with each other;
a centrifugal weight (41) arranged to move to a radially outer side of the pressure plate (77) by an amount of movement corresponding to a magnitude of a centrifugal force to thereby press the pressure plate (77) in a direction causing the first plate (64) and the second plate (65) to contact with each other by using a force corresponding to the amount of movement,
wherein the pressure plate (77) causes the first plate (64) and the second plate (65) to contact with each other even when the engine (4) is in a stopped state;
a plurality of elastic members (83, 122c, 122d) arranged to urge the pressure plate (77) towards the first plate side and the second plate (65) to thereby cause the first plate (64) and the second plate (65) to contact with each other even when the engine (4) is in a stopped state; and
a roller retainer (78) arranged to rotate with the driving-side rotator (46) and that is located on an opposite side of the first plate (64) and the second plate (65) via the pressure plate (77) with respect to the predetermined direction;
wherein the plurality of elastic members includes a clutch spring (83);
**characterized by**
an elastic member retainer (121) arranged to rotate with the driving-side rotator (46), that is located between the pressure plate (77) and the roller retainer (78) with respect to the predetermined direction, and that regulates movement of the centrifugal weight (41) with respect to the predetermined direction;
wherein the clutch spring (83) is located on an opposite side of the elastic member retainer (121) via the roller retainer (78) with respect to the predetermined direction,
wherein the plurality of elastic members includes a first leaf spring (122c) fixed to the roller retainer (78a) and a second leaf spring (122d) to the elastic member retainer (121), the first leaf spring (122c) and the second leaf spring (122d) respectively having urging forces in directions that separate from each other, and
wherein when in use the centrifugal clutch enables stable parking in a sloped road only by carrying out a gear input operation without using the parking brake.

3. The centrifugal clutch (2) according to claim 1, wherein the spring (122b) is inserted in a contracted state with a length shorter than the natural length in the interior of the spring holder (122a), and arranged constantly to generate an urging force in an expansion direction.

4. The centrifugal clutch (2) according to any of claims 1 to 3, including means for reducing a transmission torque of the centrifugal clutch (2) at least at the time of starting the motorcycle (1) to be less than at the time of pre-starting the engine (4).

5. The centrifugal clutch (2) according to claim 4, further comprising:
a clutch operator (24) operable to cause engagement or disengagement of the centrifugal clutch (2);
a servo mechanism (200) arranged to receive a torque of the pressure plate (77) at the time of clutch disengagement performed by the clutch operator (24) and that converts the torque to a force for moving the pressure plate (77) in the direction causing the first plate (64) and the second plate (65) to separate from each other;
a sub-clutch (100) including a friction plate (101) and a pressing body (103), wherein the friction plate (101) is provided to rotate with the pressure plate (77), and the pressing body (103) receives a torque from the friction plate (101) by being press-contacted with the friction plate (101) at the time of clutch disengagement, and moves with the pressure plate (77) in the predetermined direction; and
a push mechanism (43) operable through the clutch operator (24) to thereby move the pressing body (103) to an opposite direction with respect to the predetermined direction,
wherein the means for reducing the transmission torque includes at least the clutch operator (24), the servo mechanism (200), the sub-clutch (100), and the push mechanism (43).

6. The centrifugal clutch (2) according to claim 5, wherein the servo mechanism (200) is a ball cam mechanism.

7. The centrifugal clutch (2) according to claim 5, wherein the push mechanism (43) includes a ball.

8. The centrifugal clutch (2) according to any preceding claim, wherein the centrifugal clutch (2) is of a wet multi-plate type.

9. A motorcycle (1) comprising a centrifugal clutch (2) according to any preceding claim.

## Patentansprüche

1. Eine Fliehkraftkupplung (2) für ein Motorrad (1), die wirksam ist, um eine Antriebskraft eines Motors (4) zu übertragen, wobei die Fliehkraftkupplung (2) folgende Merkmale umfasst:
einen Antriebsseitenrotator (46), der eine erste Platte (64) umfasst;
einen Angetriebene-Seite-Rotator (48), der eine zweite Platte (65) gegenüber der ersten Platte (64) in einer vorbestimmten Richtung umfasst;
eine Druckplatte (77), die angeordnet ist, um sich mit dem Antriebsseitenrotator (46) zu drehen und in der vorbestimmten Richtung zu bewegen, wodurch bewirkt wird, dass sich die erste Platte (64) und die zweite Platte (65) kontaktieren;
ein Fliehgewicht (41), das angeordnet ist, um sich um einen Bewegungsbetrag, der einer Größe einer Fliehkraft entspricht, zu einer radial äußeren Seite der Druckplatte (77) zu bewegen, um dadurch die Druckplatte (77) in eine Richtung zu drücken, die bewirkt, dass sich die erste Platte (64) und die zweite Platte (65) kontaktieren durch Verwenden einer Kraft, die dem Bewegungsbetrag entspricht,
wobei die Druckplatte (77) bewirkt, dass sich die erste Platte (64) und die zweite Platte (65) kontaktieren, selbst wenn der Motor (4) in einem angehaltenen Zustand ist;
eine Mehrzahl von elastischen Baugliedern (83, 122, 122a, 122b), die angeordnet sind, um die Druckplatte (77) zu der Seite der ersten Platte und der zweiten Platte (65) zu drücken, um dadurch zu bewirken, dass sich die erste Platte (64) und die zweite Platte (65) kontaktieren, selbst wenn der Motor (4) in einem angehaltenen Zustand ist; und
einen Rollenhalter (78), der angeordnet ist, um sich mit dem Antriebsseitenrotator (46) zu drehen, und der bezüglich der vorbestimmten Richtung auf einer gegenüberliegenden Seite der ersten Platte (64) und der zweiten Platte (65) angeordnet ist, über die Druckplatte (77);
wobei die Mehrzahl der elastischen Bauglieder eine Kupplungsfeder (83) umfasst;
**gekennzeichnet durch**:
einen Elastisches-Bauglied-Halter (121), der angeordnet ist, um sich mit dem Antriebsseitenrotator (46) zu drehen, der bezüglich der vorbestimmten Richtung zwischen der Druckplatte (77) und dem Rollenhalter (78) angeordnet ist, und der eine Bewegung des Fliehgewichts (41) bezüglich der vorbestimmten Richtung regelt;
wobei die Kupplungsfeder (83) bezüglich der vorbestimmten Richtung auf einer gegenüberliegenden Seite des elastisches-Bauglied-Halters (121) angeordnet ist, über den Rollenhalter (48),
wobei die Mehrzahl von elastischen Baugliedern einen Federhalter (122a) und eine Feder (122b) umfasst,
wobei der Federhalter (122a) eine Form einer Röhre hat, die einen röhrenförmigen Abschnitt und einen Röhrenbodenabschnitt umfasst,
wobei die Feder (122b) aus einer Spiralfeder gebildet ist und in einem Inneren der Röhre des Federhalters (122a) enthalten ist,
wobei der Röhrenbodenabschnitt an dem Rollenhalter (78) fixiert ist und die Feder (122b) eine Endseite aufweist, die an dem elastisches-Bauglied-Halter (121) fixiert ist und eine andere Endseite, die an dem Federhalter (122a) fixiert ist, oder der Röhrenbodenabschnitt an dem Elastisches-Bauglied-Halter (121) fixiert ist und die Feder (122b) eine Endseite aufweist, die an dem Rollenhalter (78) fixiert ist und eine andere Endseite, die an dem Federhalter (122a) fixiert ist, und
wobei während der Verwendung die Fliehkraftkupplung stabiles Parken in einer geneigten Straße ermöglicht, nur **durch** Ausführen einer Gangeingabeoperation ohne Verwendung der Feststellbremse.

2. Eine Fliehkraftkupplung (2) für ein Motorrad (1), die wirksam ist, um eine Antriebskraft eines Motors (4) zu übertragen, wobei die Fliehkraftkupplung (2) folgende Merkmale umfasst:
einen Antriebsseitenrotator (46), der eine erste Platte (64) umfasst;
einen Angetriebene-Seite-Rotator (48), der eine zweite Platte (65) gegenüber der ersten Platte (64) in einer vorbestimmten Richtung umfasst;
eine Druckplatte (77), die angeordnet ist, um sich mit dem Antriebsseitenrotator (46) zu drehen und in der vorbestimmten Richtung zu bewegen, wodurch bewirkt wird, dass sich die erste Platte (64) und die zweite Platte (65) kontaktieren;
ein Fliehgewicht (41), das angeordnet ist, um sich um einen Bewegungsbetrag, der einer Größe einer Fliehkraft entspricht, zu einer radial äußeren Seite der Druckplatte (77) zu bewegen, um dadurch die Druckplatte (77) in eine Richtung zu drücken, die bewirkt, dass sich die erste Platte (64) und die zweite Platte (65) kontaktieren, durch Verwenden einer Kraft, die dem Bewegungsbetrag entspricht,
wobei die Druckplatte (77) bewirkt, dass sich die erste Platte (64) und die zweite Platte (65) kontaktieren, selbst wenn der Motor (4) in einem angehaltenen Zustand ist;
eine Mehrzahl von elastischen Baugliedern (83, 122c, 122d), die angeordnet sind, um die Druckplatte (77) zu der Seite der ersten Platte und der zweiten Platte (65) zu drücken, um dadurch zu bewirken, dass sich die erste Platte (64) und die zweite Platte (65) kontaktieren, selbst wenn der Motor (4) in einem angehaltenen Zustand ist; und
einen Rollenhalter (78), der angeordnet ist, um sich mit dem Antriebsseitenrotator (46) zu drehen und der bezüglich der vorbestimmten Richtung auf einer gegenüberliegenden Seite der ersten Platte und der zweiten Platte (65) angeordnet ist, über die Druckplatte (77);
wobei die Mehrzahl von elastischen Baugliedern eine Kupplungsfeder (83) umfasst;
**gekennzeichnet durch**
einen Elastisches-Bauglied-Halter (121), der angeordnet ist, um sich mit dem Antriebsseitenrotator (46) zu drehen, der bezüglich der vorbestimmten Richtung zwischen der Druckplatte (77) und dem Rollenhalter (48) angeordnet ist, und der eine Bewegung des Fliehgewichts (41) bezüglich der vorbestimmten Richtung regelt;
wobei die Kupplungsfeder (83) bezüglich der vorbestimmten Richtung auf einer gegenüberliegenden Seite des elastisches-Bauglied-Halters (121) angeordnet ist, über den Rollenhalter (78),
wobei die Mehrzahl von elastischen Baugliedern eine erste Blattfeder (122c) umfasst, die an dem Rollenhalter (78a) fixiert ist, und eine zweite Blattfeder (122d), die an dem Elastisches-Bauglied-Halter (121) fixiert ist, wobei die erste Blattfeder (122c) und die zweite Blattfeder (122d) jeweils Zugkräfte in Richtungen haben, die sie voneinander trennen, und
wobei während der Verwendung die Fliehkraftkupplung stabiles Parken in einer geneigten Straße ermöglicht, nur **durch** Ausführen einer Gangeingabeoperation ohne Verwendung der Feststellbremse.

3. Die Fliehkraftkupplung (2) gemäß Anspruch 1, bei der die Feder (122b) in einem zusammengezogenen Zustand mit einer Länge, die kürzer ist als die natürliche Länge, in das Innere des Federhalters (122a) eingefügt wird, und konstant angeordnet ist, um eine Zugkraft in einer Ausdehnungsrichtung zu erzeugen.

4. Die Fliehkraftkupplung (2) gemäß einem der Ansprüche 1 bis 3, die eine Einrichtung umfasst zum Reduzieren eines Übertragungsdrehmoments einer Fliehkraftkupplung (2), zumindest zum Zeitpunkt des Startens des Motorrads (1), so dass dasselbe geringer ist als zum Zeitpunkt des Vorstartens des Motors (4).

5. Die Fliehkraftkupplung (2) gemäß Anspruch (4), die ferner folgende Merkmale aufweist:
einen Kupplungsschalter (24), der wirksam ist, um eine Eingriffnahme oder Außereingriffnahme der Fliehkraftkupplung (2) zu bewirken;
einen Servomechanismus (200), der angeordnet ist, um ein Drehmoment der Druckplatte (77) zu empfangen, zum Zeitpunkt der Kupplungsaußereingriffnahme, die durch den Kupplungsschalter (24) durchgeführt wird, und der das Drehmoment in eine Kraft umwandelt zum Bewegen der Druckplatte (77) in die Richtung, die bewirkt, dass sich die erste Platte (64) und die zweite Platte (65) voneinander trennen;
eine Teilkupplung (100), die eine Reibungsplatte (101) und einen Presskörper (103) umfasst, wobei die Reibungsplatte (101) vorgesehen ist, um sich mit der Druckplatte (77) zu drehen, und der Presskörper (103) ein Drehmoment von der Reibungsplatte (101) empfängt, in dem derselbe zum Zeitpunkt der Kupplungsaußereingriffnahme mit der Reibungsplatte (101) in Presskontakt ist, und sich mit der Druckplatte (77) in der vorbestimmten Richtung bewegt; und
einen Drückmechanismus (43), der durch den Kupplungsoperator (24) betreibbar ist, um dadurch den Presskörper (103) zu einer entgegengesetzten Richtung bezüglich der vorbestimmten Richtung zu bewegen,
wobei die Einrichtung zum Reduzieren des Übertragungsdrehmoments zumindest den Kupplungsschalter (24), den Servomechanismus (200), die Teilkupplung (100) und den Drückmechanismus (43) umfasst.

6. Die Fliehkraftkupplung (2) gemäß Anspruch 5, bei der der Servomechanismus (200) ein Kugel-Nocken-Mechanismus ist.

7. Die Fliehkraftkupplung (2) gemäß Anspruch 5, bei der der Drückmechanismus (43) eine Kugel umfasst.

8. Die Fliehkraftkupplung (2) gemäß einem der vorhergehenden Ansprüche, wobei die Fliehkraftkupplung (2) von einem nassen Mehrplattentyp ist.

9. Ein Motorrad (1), das eine Fliehkraftkupplung (2) gemäß einem der vorhergehenden Ansprüche aufweist.

## Revendications

1. Embrayage centrifuge (2) pour une motocyclette (1) pouvant fonctionner pour transmettre une force d'entraînement d'un moteur (4), l'embrayage centrifuge (2) comportant:
un rotateur du côté de l'entraînement (46) comportant une première plaque (64);
un rotateur du côté entraîné (48) comportant une deuxième plaque (65) opposée à la première plaque (64) dans une direction prédéterminée;
une plaque de pression (77) aménagée pour tourner avec le rotateur du côté de l'entraînement (46) et pour se déplacer dans la direction prédéterminée, pour provoquer ainsi que la première plaque (64) et la deuxième plaque (65) entrent en contact l'une avec l'autre;
un poids centrifuge (41) disposé de manière à se déplacer d'un côté radialement extérieur de la plaque de pression (77) d'une quantité de mouvement correspondant à une amplitude d'une force centrifuge, pour ainsi pousser la plaque de pression (77) dans une direction provoquant que la première plaque (64) et la deuxième plaque (65) entrent en contact l'une avec l'autre avec une force correspondant à la quantité de mouvement,
dans lequel la plaque de pression (77) provoque que la première plaque (64) et la deuxième plaque (65) entrent en contact l'une avec l'autre, même lorsque le moteur (4) est à l'état arrêté;
une pluralité d'éléments élastiques (83, 122, 122a, 122b) aménagés pour pousser la plaque de pression (77) du côté de la première plaque et de la deuxième plaque (65), pour ainsi provoquer que la première plaque (64) et la deuxième plaque (65) entrent en contact l'une avec l'autre, même lorsque le moteur (4) est à l'état arrêté; et
un moyen de retenue de rouleau (78) aménagé pour tourner avec le rotateur du côté de l'entraînement (46) et situé du côté opposé de la première plaque (64) et de la deuxième plaque (65) par l'intermédiaire de la plaque de pression (77) par rapport à la direction prédéterminée;
dans lequel la pluralité d'éléments élastiques comporte un ressort d'embrayage (83),
**caractérisé par**:
un moyen de retenue d'élément élastique (121) aménagé pour tourner avec le rotateur du côté de l'entraînement (46), qui est situé entre la plaque de pression (77) et le moyen de retenue de rouleau (78) par rapport à la direction prédéterminée, et qui régule le mouvement du poids centrifuge (41) par rapport à la direction prédéterminée;
dans lequel le ressort d'embrayage (83) est situé d'un côté opposé du moyen de retenue d'élément élastique (121) par l'intermédiaire du moyen de retenue de rouleau (78) par rapport à la direction prédéterminée,
dans lequel la pluralité d'éléments élastiques comporte un porte-ressort (122a) et un ressort (122b),
dans lequel le porte-ressort (122a) présente la forme d'un tube comportant une partie tubulaire et une partie inférieure du tube,
dans lequel le ressort (122b) est formé par un ressort hélicoïdal, est contenu à l'intérieur du tube du porte-ressort (122a),
dans lequel la partie inférieure du tube est fixée au moyen de retenue de rouleau (78) et le ressort (122b) présente un côté d'extrémité fixé au moyen de retenue d'élément élastique (121) et l'autre côté d'extrémité fixé au porte-ressort (122a), ou la partie inférieure du tube est fixée au moyen de retenue d'élément élastique (121) et le ressort (122b) présente un côté d'extrémité fixé au moyen de retenue de rouleau (78) et l'autre côté d'extrémité fixé au porte-ressort (122a), et
dans lequel, en utilisation, l'embrayage centrifuge permet un stationnement stable sur une route en pente en effectuant uniquement une opération d'entrée en vitesse sans utilisation du frein de stationnement.

2. Embrayage centrifuge (2) pour une motocyclette (1) pouvant fonctionner pour transmettre une force d'entraînement d'un moteur (4), l'embrayage centrifuge (2) comportant:
un rotateur du côté de l'entraînement (46) comportant une première plaque (64);
un rotateur du côté entraîné (48) comportant une deuxième plaque (65) opposée à la première plaque (64) dans une direction prédéterminée;
une plaque de pression (77) aménagée pour tourner avec le rotateur du côté de l'entraînement (46) et pour se déplacer dans la direction prédéterminée, pour provoquer ainsi que la première plaque (64) et la deuxième plaque (65) entrent en contact l'une avec l'autre;
un poids centrifuge (41) disposé de manière à se déplacer d'un côté radialement extérieur de la plaque de pression (77) d'une quantité de mouvement correspondant à une amplitude d'une force centrifuge, pour ainsi pousser la plaque de pression (77) dans une direction provoquant que la première plaque (64) et la deuxième plaque (65) entrent en contact l'une avec l'autre avec une force correspondant à la quantité de mouvement,
dans lequel la plaque de pression (77) provoque que la première plaque (64) et la deuxième plaque (65) entrent en contact l'une avec l'autre, même lorsque le moteur (4) est à l'état arrêté;
une pluralité d'éléments élastiques (83, 122c, 122d) aménagés pour pousser la plaque de pression (77) vers le côté de la première plaque et de la deuxième plaque (65), pour provoquer ainsi que la première plaque (64) et la deuxième plaque (65) entrent en contact l'une avec l'autre, même lorsque le moteur (4) est à l'état arrêté; et
un moyen de retenue de rouleau (78) aménagé pour tourner avec le rotateur du côté de l'entraînement (46) et situé du côté opposé de la première plaque (64) et de la deuxième plaque (65) par l'intermédiaire de la plaque de pression (77) par rapport à la direction prédéterminée;
la pluralité d'éléments élastiques comporte un ressort d'embrayage (83);
**caractérisé par**
un moyen de retenue d'élément élastique (121) aménagé pour tourner avec le rotateur du côté de l'entraînement (46), qui est situé entre la plaque de pression (77) et le moyen de retenue de rouleau (78) par rapport à la direction prédéterminée, et qui régule le mouvement du poids centrifuge (41) par rapport à la direction prédéterminée;
dans lequel le ressort d'embrayage (83) est situé du côté opposé du moyen de retenue d'élément élastique (121) par l'intermédiaire du moyen de retenue de rouleau (78) par rapport à la direction prédéterminée,
dans lequel la pluralité d'éléments élastiques comporte un premier ressort à lame (122c) fixé au moyen de retenue de rouleau (78a) et un deuxième ressort à lames (122d) fixé au moyen de retenue d'élément élastique (121), le premier ressort à lame (122c) et le deuxième ressort à lame (122d) présentant respectivement des forces de poussée dans des directions s'éloignant l'une de l'autre, et
dans lequel, en utilisation, l'embrayage centrifuge permet un stationnement stable sur une route en pente en effectuant uniquement une opération d'entrée en vitesse sans utilisation du frein de stationnement.

3. Embrayage centrifuge (2) selon la revendication 1, dans lequel le ressort (122b) est introduit à l'état contracté à une longueur inférieure à la longueur naturelle à l'intérieur du porte-ressort (122a), et disposé en permanence pour générer une force de poussée dans une direction de détente.

4. Embrayage centrifuge (2) selon l'une quelconque des revendications 1 à 3, comportant des moyens pour réduire un couple de transmission de l'embrayage centrifuge (2) au moins au moment du démarrage de la motocyclette (1) de manière qu'il soit inférieur à celui au moment du prédémarrage du moteur (4).

5. Embrayage centrifuge (2) selon la revendication 4, comprenant par ailleurs:
un actionneur d'embrayage (24) pouvant fonctionner pour provoquer l'engagement ou le dégagement de l'embrayage centrifuge (2);
un mécanisme d'asservissement (200) aménagé pour recevoir un couple de la plaque de pression (77) au moment du dégagement de l'embrayage réalisé par l'actionneur d'embrayage (24) et qui convertit le couple en une force pour déplacer la plaque de pression (77) dans la direction provoquant que la première plaque (64) et la deuxième plaque (65) s'éloignent l'une de l'autre;
un sous-embrayage (100) comportant une plaque de friction (101) et un corps de pression (103), où la plaque de friction (101) est prévue pour tourner avec la plaque de pression (77), et le corps de pression (103) reçoit un couple de la plaque de friction (101) en entran en contact par pression avec la plaque de friction (101) au moment du dégagement de l'embrayage, et se déplace avec la plaque de pression (77) dans la direction prédéterminée; et
un mécanisme de poussée (43) pouvant fonctionner par l'intermédiaire de l'actionneur d'embrayage (24) pour déplacer ainsi le corps de pression (103) dans une direction opposée par rapport à la direction prédéterminée,
dans lequel le moyen pour réduire le couple de transmission comporte au moins l'actionneur d'embrayage (24), le mécanisme d'asservissement (200), le sous-embrayage (100) et le mécanisme de poussée (43).

6. Embrayage centrifuge (2) selon la revendication 5, dans lequel le mécanisme d'asservissement (200) est un mécanisme de came à bille.

7. Embrayage centrifuge (2) selon la revendication 5, dans lequel le mécanisme de poussée (43) comporte une bille.

8. Embrayage centrifuge (2) selon l'une quelconque des revendications précédentes, dans lequel l'embrayage centrifuge (2) est d'un type à disques multiples humide.

9. Motocyclette (1) comprenant un embrayage centrifuge (2) selon l'une quelconque des revendications précédentes.
